## Europäisches Patentamt

## European Patent Office

## Office européen des brevets

(11) Publication number: **0 059 953**
**B1**

## EUROPEAN PATENT SPECIFICATION

(45) Date of publication of patent specification: **02.07.86**

(51) Int. Cl.⁴: **G 09 F 21/04, G 09 F 15/00**

(21) Application number: **82101741.5**

(22) Date of filing: **05.03.82**

(54) Advertizing board for mobile display system.

(30) Priority: **11.03.81 JP 34721/81**

(43) Date of publication of application:
**15.09.82 Bulletin 82/37**

(45) Publication of the grant of the patent:
**02.07.86 Bulletin 86/27**

(84) Designated Contracting States:
**CH DE FR GB LI**

(56) References cited:
**US-A-3 702 033**
**US-A-4 110 792**
**US-A-4 232 488**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Futatsuishi, Shunichi c/o Mitsubishi Denki K.K.**
**Nagaseki Works No. 6-14, Maruo-machi**
**Nagasaki-shi Nagasaki (JP)**
Inventor: **Fujita, Shozo c/o Mitsubishi Denki K.K.**
**Nagasaki Works No. 6-14, Maruo-machi**
**Nagasaki-shi Nagasaki (JP)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

Courier Press, Leamington Spa, England.

## Description

This invention relates to a vehicle-mounted display and advertising arrangement comprising a display board which can be placed in a raised position for viewing by an audience and placed in a lowered position for transport, and a lifting mechanism arranged to raise and lower said display board.

Such an arrangement is known from US—A—4 110 792.

In a mobile display system for displaying information on a vehicle-mounted display board for simultaneous viewing by a number of persons, it is necessary to raise the display board to a predetermined height so that all persons can clearly see it, and then to lower the display board before the vehicle is moved to another place. For this purpose, a lift is mounted on the vehicle, to move the display board vertically at the display site. During the display, the exposure of the lift and its control means to the audience is unattractive. Therefore, flat boards may be set around the display board in such a manner as to cover the lift and the control means. The flat boards are used as advertisement means, namely, an advertising board.

A set of such flat boards is referred to an advertising board for a mobile display system. At the display site, the flat boards are set around the display board, which is raised to a suitable level. Before the vehicle is moved to another place, the flat boards are removed from the display board and loaded thereon. Heretofore, the assembling and disassembling of the flat boards have been manually carried out, requiring a large amount of time and labor.

U.S. Patent 4,110,792 to Long et al discloses a vehicle-mounted display apparatus having a trio of hinged panels which are folded one over the other for transport, and which may be pivotted into a flat shape for use. The panels are supported by a partially collapsible frame structure, so that the panels are rotated through 90° from the transport to the display position. Such a system is disadvantageous in that there is insufficient structural stability of the system, and the load is highly variable during erection of the display. Also, the lift and control mechanism are visible during display, resulting in the disadvantage noted above.

An object of this invention is to eliminate the above-described difficulty accompanying a conventional advertising board for a mobile display system. More specifically, an object of this invention is to provide a vehicle-mounted display and advertising arrangement which is divided into a plurality of parts which can be mechanically slidably assembled and disassembled with ease.

According to the invention, the arrangement defined in the first paragraph of this specification is characterised by a stand carrying said display board and mounted on a chassis of the vehicle for raising and lowering by said lifting mechanism; at least one first flat board mounted on said stand laterally of said display board and having a flat surface parallel to said display board for carrying advertising material; at least one further flat board mounted for vertical movement relative to said stand when the stand is in said raised position and having a flat surface parallel to said display board for carrying advertising material; a lifting device for raising and lowering said at least one further flat board relative to said stand between a transport position and a vertically displaced display position; said at least one first flat board being on said stand in a position such as to mask a portion of said lifting device from said audience; and said at least one further flat board having said display position so arranged as to mask a further portion of said lifting device from said audience.

For a better understanding of the invention, and to show how the same may be carried into effect, reference will now be made, by way of example, to the accompanying drawings, in which:

Figure 1 is front view of one embodiment of the invention; and

Figures 2, 3 and 4 are explanatory diagrams illustrating several of the details of the construction and operation thereof.

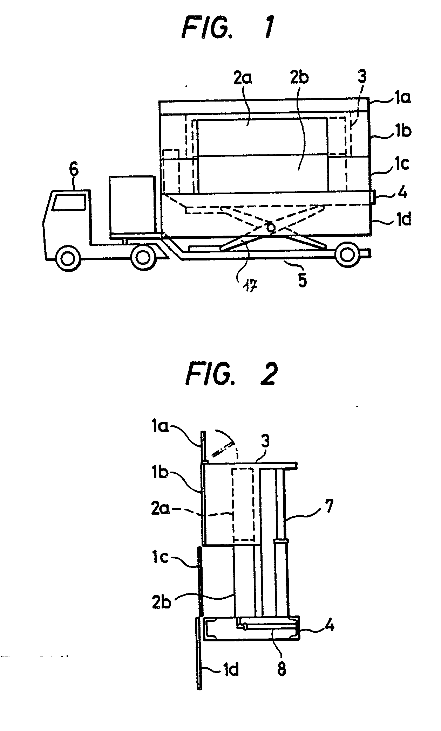

Fig. 1 is a front view showing one embodiment of this invention, and Figs. 2, 3 and 4 are explanatory diagrams of several parts thereof, where like parts are designated by like reference numerals or characters. In the Figures, reference characters 1a, 1b, 1c and 1d designate flat boards forming an advertising board; 2a and 2b are display boards forming a display section; 3 is a support structure; 4, a stand; 5, a chassis; 6, a tractor; 7, a lift; 8, a slider; 9, a cylinder; 10, a guide; 11, a roller; 12 and 13, a rack and pinion, respectively; 14 and 15, reduction gears; 16, an electric motor, and 17 a scissors-type jack for raising and lowering the stand 4 relative to the chassis 5.

The advertising board 1 is obtained by assembling the flat boards 1a through 1d as shown in Figs. 1 and 2, the display section 2 being obtained by arranging the display boards 2a and 2b as shown in Fig. 1.

The operation of the apparatus thus arranged will now be described. Fig. 1 is a front view of the advertising board, and Fig. 2 is a side view showing a part of the advertising board. The advertising board shown in Figs. 1 and 2 is in the display state, i.e., the flat boards 1a and 1b are in a common vertical plane, and the flat boards 1b, 1c and 1d are installed in parallel vertical planes which are shifted from one another horizontally by as much as the thickness of the board, respectively. The support structure 3 is mounted on the stand 4, and can be moved up and down by the lift. The flat board 1b is fixedly secured to the support 3, and thus the board 1b and the display board 2a can be moved vertically by the lift 7. The flat board 1a is supported at its lower edge by the structure 3, and can be turned through 90° about its lower edge as indicated in Fig. 2. The display board 2b is mounted onto the stand 4, and can be moved horizontally with respect to the stand by the slider 8 to allow board 2a to be lowered. For clarity, the flat boards 1a, 1b, 1c and 1d will be referred to as "third, second, first and fourth boards", respectively, hereinafter when applicable.

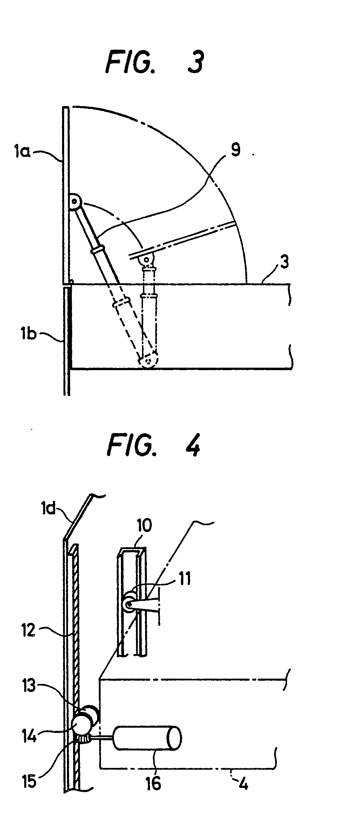

The display board 2a which has been raised by the lift 7 is lowered by the lift when the display is to be taken down. At the same time, the second flat board 1b secured to the support 3 is lowered together with the display board 2a, so that it is set behind the flat board 1c. Then, the flat board 1a is turned through 90° about its lower edge by a cylinder mechanism 9, so that it is placed on the structure 3, as shown in Fig. 3. The flat board 1d is set on the front surface of the flat board 1c by means of the rack 12 and pinion gear 13, the vertically driving motor 16 and reduction gears 14 and 15, as seen in the perspective view of Fig. 4. The flat board 1d is not secured directly to the structure 3 and the stand 4, and therefore, a plurality of guides 10 are fixedly secured to the flat board 1d and a plurality of rollers 11 are fixedly secured to the stand 4 so that the flat board 1d will not be shifted horizontally. The advertising board 1 can be collapsible as described above, and is erected by following the above-described steps in reverse order.

In the above-described embodiment, an electric motor is used; however, it may be replaced by a drive which operates in association with the hydraulic system.

As is clear from the above description, the boards forming the advertising board are fixedly secured to their respective supports, etc. Therefore, the boards may be automatically erected and collapsed. The board is designed so as to be able to withstand vibration or wind pressure while being transported or after it has been erected at the site of display.

## Claims

1. A vehicle-mounted display and advertising arrangement comprising a display board (2a, 2b) which can be placed in a raised position for viewing by an audience and placed in a lowered position for transport, and a lifting mechanism (17) arranged to raise and lower said display board (2a, 2b), characterised by:

a stand (4) carrying said display board (2a, 2b) and mounted on a chassis (5) of the vehicle for raising and lowering by said lifting mechanism (17);

at least one first flat board (1c) mounted on said stand laterally of said display board (2a, 2b) and having a flat surface parallel to said display board (2a, 2b) for carrying advertising material;

at least one further flat board (1b) mounted for vertical movement relative to said stand (4) when the stand is in said raised position and having a flat surface parallel to said display board (2a, 2b) for carrying advertising material;

a lifting device (7) for raising and lowering said at least one further flat board (1b) relative to said stand (4) between a transport position and a vertically displaced display position;

said at least one first flat board (1c) being on said stand (4) in a position such as to mask a portion of said lifting device (7) from said audience; and

said at least one further flat board (1b) having said display portion so arranged as to mask a further portion of said lifting device (7) from said audience.

2. An arrangement according to claim 1 characterised by:

at least one additional flat board (1d) mounted for vertical movement relative to said stand (4) when the stand is in the raised position and having a flat surface parallel to said display board (2a, 2b) for carrying advertising material;

a further lifting device (12, 13, 14, 15, 16) for raising and lowering said at least one additional flat board (1d) between a transport position and a vertically displaced display position; and

said at least one additional flat board (1d) having its display position so arranged as to mask at least a portion of said lifting mechanism (17) from said audience.

3. An arrangement according to claim 2 characterised in that said at least one additional flat board (1d) is arranged also to mask said further lifting device (12, 13, 14, 15, 16) from the audience, at least when in said display position.

4. A arrangement according to claim 2 or 3 characterised in that said at least one first, further and additional flat boards are arranged to be closely adjacent and superimposed when in said transport position.

5. An arrangement according to any one of claims 2 to 4 characterised in that at least one of said lifting device (7), said further lifting device (12, 13, 14, 15, 16) and said lifting mechanism (17) is hydraulic.

6. An arrangement according to any one of claims 2 to 5 characterised in that said further lifting device (12, 13, 14, 15, 16) comprises at least one electric motor means (16).

7. An arrangement according to claim 6 characterised in that said further lifting device comprises electric motor means (16) driving pinion means (13, 14) and an associated rack (12).

8. An arrangement according to any one of the preceding claims characterised in that said further flat board (1b) is mounted on a support structure (3) vertically movable relative to said stand (4).

9. An arrangement according to claim 8 characterised by another flat board (1a) mounted on said support structure (3), a lower edge of said another flat board (1a) being adjacent an upper edge of said at least one further flat board (1b), said another flat board (1a) being pivotable about the lower edge thereof to a plane substantially perpendicular to that of said at least one further flat board (1b).

10. An arrangement according to claim 9 characterised in that said another flat board (1a) is hinged to said at least one further flat board (1b) whereby it is movable to a position substantially coplanar with the latter board (1b).

11. An arrangement according to claim 9 or 10 characterised by drive means (9) for pivoting said another flat board.

**Patentansprüche**

1. Fahrzeug-befestigte Anzeige- und Werbeanordnung mit einer Anzeigetafel (2a, 2b), die zur Betrachtung durch ein Publikum in eine angehobene Stellung und für den Transport in eine abgesenkte Stellung bringbar ist, wobei ein Hebemechanismus (17) vorgesehen ist, um die Anzeigetafel (2a, 2b) anzuheben und abzusenken, gekennzeichnet durch: ein Standgestell (4), welches die Anzeigetafel (2a, 2b) trägt und auf einem Chassis (5) des Fahrzeuges befestigt ist, um durch den Hebemechanismus (17) abgesenkt und angehoben zu werden; zumindest eine erste flache Tafel (1c), die auf dem Standgestell seitlich der Anzeigetafel (2a, 2b) angebracht ist und eine ebene Fläche aufweist, die parallel zur Anzeigetafel (2a, 2b) für das Tragen des Werbematerials angeordnet ist; zumindest eine weitere flache Tafel (1b), die für eine Vertikalbewegung relativ zum Standgestell (4) angebracht ist, wenn das Standgestell sich in der angehobenen Stellung befindet, welche flache Tafel eine ebene Fläche aufweist, die parallel zur Anzeigetafel (2a, 2b) für das Tragen des Werbematerials angeordnet ist; eine Hebevorrichtung (7) zum Anheben und Absenken der zumindest einen weiteren flachen Tafel (1d) relativ zum Standgestell (4) zwischen einer Transportstellung und einer vertikal angeordneten Anzeigestellung; wobei die zumindest eine erste flache Tafel (1c) sich auf dem Standgestell (4) in einer solchen Lage befindet, dass ein Teil der Hebevorrichtung (7) für das Publikum verdeckt ist und wobei die zumindest eine weitere flache Tafel (1b) in der Anzeigestellung so angeordnet ist, dass sie einen weiteren Abschnitt der Hebevorrichtung (7) für das Publikum abdeckt.

2. Anordnung nach Anspruch 1, gekennzeichnet durch: zumindest eine zusätzliche flache Tafel (1d), die für eine Vertikalbewegung relativ zum Standgestell (4) angebracht ist, wenn das Standgestell sich in der angehobenen Stellung befindet und eine ebene Fläche aufweist, die parallel zur Anzeigetafel (2a, 2b) zum Tragen des Werbematerials angeordnet ist; eine weitere Hebevorrichtung (12, 13, 14, 15, 16) zum Anheben und Absenken der zumindest einen zusätzlichen flachen Tafel (1d) zwischen einer Transportstellung und einer vertikal verschobenen Anzeigestellung; wobei die zumindest eine zusätzliche flache Tafel (1d) in der Anzeigestellung so angeordnet ist, dass sie zumindest einen Teil des Hebemechanismus (17) für das Publikum abdeckt.

3. Anordnung nach Anspruch 2, dadurch gekennzeichnet, dass zumindest eine zusätzliche flache Tafel (1d) so angeordnet ist, dass sie die weitere Hebevorrichtung (12, 13, 14, 15, 16) für das Publikum zumindest in der Anzeigestellung abdeckt.

4. Anordnung nach Anspruch 2 oder 3, dadurch gekennzeichnet, dass zumindest eine erste weitere und zusätzliche flache Tafel in der Transportstellung dicht nebeneinander und übereinander angeordnet ist.

5. Anordnung nach einem der Ansprüche 2 bis 4. dadurch gekennzeichnet, dass die Hebevorrichtung (7) und/oder die weitere Hebevorrichtung (12, 13, 14, 15, 16) und/oder der Hebemechanismus (17) hydraulisch arbeiten.

6. Anordnung nach einem der Ansprüche 2 bis 5, dadurch gekennzeichnet, dass die weitere Hebevorrichtung (12, 13, 14, 15, 16) zumindest einen Elektromotor (16) umfasst.

7. Anordnung nach Anspruch 6, dadurch gekennzeichnet, dass die weitere Hebevorrichtung einen elektrischen Motor (16), Antriebsritzel (13, 14) und eine zugehörige Zahnstange (12) umfasst.

8. Anordnung nach einem der vorhergehenden Ansprüche, dadurch gekennzeichnet, dass die weitere flache Tafel (1b) relativ zum Standgestell (4) vertikal bewegbar auf einem Stützaufbau (3) befestigt ist.

9. Anordnung nach Anspruch 8, gekennzeichnet durch eine andere flache Tafel (1a), die auf dem Stützaufbau (3) angebracht ist, wobei eine Unterkante der anderen flachen Tafel (1a) neben der Oberkante der zumindest einen weiteren flachen Tafel (1b) angeordnet ist, wobei die andere flache Tafel (1a) um ihre Unterkante in einer Ebene im wesentlichen senkrecht zur Ebene der zumindest einen weiteren flachen Tafel (1b) drehbar ist.

10. Anordnung nach Anspruch 9, dadurch gekennzeichnet, dass die andere flache Tafel (1a) an zumindest einer weiteren flachen Tafel (1d) angelenkt ist, wodurch sie in eine Stellung bewegbar ist, die im wesentlichen koplanar zur letzteren Tafel (1b) ist.

11. Anordnung nach Anspruch 9 oder 10, gekennzeichnet durch Antriebsmittel (9) für das Drehen oder Schwenken der anderen flachen Tafel.

**Revendications**

1. Agencement d'affichage et publicité, monté sur véhicule, comportant un panneau d'affichage (2a, 2b) qui peut être mis à une position levée pour être vu par des spectateurs, et qui peut être mis à une position abaissée pour le transport, et un mécanisme élévateur (17) agencé pour lever et descendre ledit panneau d'affichage (2a, 2b), caractérisé par:

un support (4) portant ledit panneau d'affichage (2a, 2b) et monté sur un châssis (5) du véhicule, pour levée et descente par ledit mécanisme élévateur (17);

au moins un premier panneau plat (1c) monté sur ledit support, latéralement par rapport audit panneau d'affichage (2a, 2b), et ayant une surface plane parallèle audit panneau d'affichage (2a, 2b) pour porter la matière publicitaire;

au moins un panneau plat supplémentaire (1b) monté pour pouvoir être déplacé verticalement par rapport audit support (4) lorsque ce dernier est à ladite position levée, et ayant une surface plane parallèle audit panneau d'affichage (2a, 2b) pour porter la matière publicitaire;

un dispositif élévateur (7) pour lever et descendre au moins un panneau plat supplémentaire (1b) par rapport audit support (4), entre une position de transport et une position d'affichage verticalement déplacée;

le fait que ledit premier panneau plat (1c) est sur ledit support (4) dans une position telle qu'une portion dudit dispositif élévateur (7) soit cachée auxdits spectateurs; et

le fait que ledit panneau plat supplémentaire (1b) a sadite position d'affichage aménagée de manière à ce qu'une autre portion dudit dispositif élévateur (7) soit cachée auxdits spectateurs.

2. Agencement selon la revendication 1, caractérisé par:

au moins un panneau plat additionnel (1d) monté pour être mû verticalement par rapport audit support (4) lorsque ce dernier est en position levée, et ayant une surface plane parallèle audit panneau d'affichage (2a, 2b) pour porter de la matière publicitaire;

un autre dispositif élévateur (12, 13, 14, 15, 16) pour lever et descendre ledit panneau plat additionnel (1d) entre une position de transport et une position d'affichage déplacée verticalement; et

le fait que ledit panneau plat additionnel (1d) a sa position d'affichage aménagée de façon qu'au moins une partie dudit mécanisme élévateur (17) soit masquée auxdits spectateurs.

3. Agencement selon la revendication 2, caractérisé en ce que ledit panneau plat additionnel (1d) est aussi agencé de manière que, au moins dans ladite position d'affichage, ledit autre dispositif élévateur (12, 13, 14, 15, 16) soit caché aux spectateurs.

4. Agencement selon la revendication 2 ou 3, caractérisé en ce qu'au moins le premier panneau, le panneau supplémentaire et le panneau additionnel sont arrangés pour être étroitement adjacents et superposés lorsque ladite position de transport est réalisée.

5. Agencement selon l'une quelconque des revendications 2 à 4, caractérisé en ce qu'au moins ledit dispositif élévateur (7), ledit autre dispositif élévateur (12, 13, 14, 15, 16), ou ledit mécanisme élévateur (17), est hydraulique.

6. Agencement selon l'une quelconque des revendications 2 à 5, caractérisé en ce que ledit autre dispositif élévateur (12, 13, 14, 15, 16) comporte au moins un moyen moteur électrique (16).

7. Agencement selon la revendication 6, caractérisé en ce que ledit audit dispositif élévateur comporte des moyens moteurs électriques (16) entraînant des moyens du genre pignon (13, 14) et une crémaillère associée (12).

8. Agencement selon l'une quelconque des revendications précédentes, caractérisé en ce que ledit panneau plat supplémentaire (1b) est monté sur une structure-support (3) mobile verticalement par rapport audit support (4).

9. Agencement selon la revendication 8, caractérisé par un autre panneau plat (1a) monté sur ladite structure-support (3), un bord inférieur dudit autre panneau plat (1a) étant adjacent à un bord supérieur dudit panneau plat supplémentaire (1b), ledit autre panneau plat (1a) étant apte à pivoter autour de son bord inférieur, jusqu'à un plan sensiblement perpendiculaire à celui dudit panneau plat supplémentaire (1b).

10. Agencement selon la revendication 9, caractérisé en ce que ledit autre panneau plat (1a) est monté à pivotement sur ledit panneau plat supplémentaire (1b), de manière à pouvoir être déplacé à une position sensiblement coplanaire au dernier panneau nommé (1b).

11. Agencement selon la revendication 9 ou 10, caractérisé par des moyens d'entraînement (9) pour faire pivoter ledit autre panneau plat.

## FIG. 1

## FIG. 2

## FIG. 3

## FIG. 4